Europäisches Patentamt

European Patent Office

Office européen des brevets

(11) Publication number : **0 387 684 B1**

# (12) EUROPEAN PATENT SPECIFICATION

(45) Date of publication of patent specification :
24.05.95 Bulletin 95/21

(51) Int. Cl.[6] : **G01N 21/35,** G01N 33/00

(21) Application number : **90104364.6**

(22) Date of filing : **07.03.90**

(54) Improved pressure-modulated infrared gas analyzer and method.

(30) Priority : **16.03.89 US 324069**

(43) Date of publication of application :
**19.09.90 Bulletin 90/38**

(45) Publication of the grant of the patent :
**24.05.95 Bulletin 95/21**

(84) Designated Contracting States :
**DE FR GB IT NL**

(56) References cited :
**GB-A- 2 204 684
US-A- 4 163 899
US-A- 4 500 207
ARCHIV FÜR TECHNISCHES MESSEN, Blatt V
723-23 March 1965, pages 59 - 62; K.H. WIN-
TERLING: "Kontinuierliche Gasanalyse durch
Absorption infraroter Strahlung"**

(56) References cited :
**ANALYTICAL CHEMISTRY. vol. 58, no. 11,
September 1986, COLUMBUS US pages 2172
-2178; C.S. IRVING ET AL.: "Measurement of
13CO2/12CO2 abundance by nondispersive i.r.
heterodyne ratiometry as an alternative to gas
isotope ratio mass spect."
ISA TRANSACTIONS. vol. 25, no. 4, 1986,
PITTSBURGH US pages 31 - 39; R.L.NELSON:
"A new AOFT-based solid-state in-situ mul-
ti-gas analyser for stack emissions"**

(73) Proprietor : **THE PERKIN-ELMER
CORPORATION
761 Main Avenue
Norwalk Connecticut 06859-0181 (US)**

(72) Inventor : **Mount, Bruce E.
21810 Manada Court
Diamond Bar, CA 91765 (US)**
Inventor : **Koslin, Mark E.
9803 Fremont Avenue
Montclair, CA 91763 (US)**

(74) Representative : **Patentanwälte Grünecker,
Kinkeldey, Stockmair & Partner
Maximilianstrasse 58
D-80538 München (DE)**

EP 0 387 684 B1

## Description

BACKGROUND OF THE INVENTION

Field of Invention

This invention relates to gas analyzers for detecting low concentrations of a specific gas and is particularly directed to an improvement in such gas analyzers such that it is possible to detect low concentrations of a selected gas, carbon monoxide (CO), in the order of 5 parts per million (ppm) in atmospheric air with a typical full scale capability of 130 ppm, over-ranging to as high as 400 ppm.

This invention also relates to a method of detecting low concentrations of a selected gas, such as CO.

Prior Art

The U.S.Patent No. 4,163,899, entitled "Method & Apparatus for Gas Analysis" of I.G. Burough, discloses a pressure modulated infrared gas analyzer which utilizes an air pump as a pressure modulator pulsating through a sample chamber at a first frequency to produce modulation of the absorption of IR energy due to gas density changes, and modulation of the IR source intensity through said sample chamber at a second frequency to allow detection of IR source intensity changes.

This analyzer is used for the detection of CO with a full-scale sensitivity of approximately 3000 ppm and resolution of approximately 100 ppm which is 20 to 100 times less sensitive than the gas analyzer constructed in accordance with the teachings of this invention.

Inherent in the method and apparatus of the prior art gas analyzer is a limitation which prevents detection of levels of CO below about 50 to 100 ppm. With zero CO present in the sample chamber, an output equivalent to from 10 to 50 ppm of CO is obtained; this may be referred to as an "offset". This offset may be due to several factors some of which are:

1) Modulation of the IR energy due to vibration of the chamber walls,

2) Modulation of the IR energy due to the presence in the sample chamber of gases, such as carbon dioxide, which have energy absorption bands slightly overlapping that of the CO interference filter utilized,

3) Coupling of electrical energy from the pressure modulation source into the infrared detector circuitry (only a few microvolts is enough to produce several ppm CO equivalent signal).

Suggestions have been made to improve the resolution of the prior art gas analyzer from 100 ppm to 5 ppm. One suggestion was to use a catalytic CO removal cell after each measurement which was determined to be unacceptable for several reasons:

a) the CO removal cell required an electro-mechanical valve to divert the sample into the removal cell. If four readings per minute are required on a continuous basis, the valve must cycle over two million times per year. By valving the sample gas containing CO through a catalytic CO removal cell, a reading of the offset may be obtained, and the offset subtracted from the reading obtained with the CO present in the sample. This procedure must be repeated each time a CO measurement is desired.

b) a typical removal cell is constructed with a catalytic material which must be heated to provide optimum efficiency of CO removal. The energy required for heating the cell can be significant.

Another suggestion was to utilize a sample chamber which is resonant at the pressure modulation frequency, thus increasing the efficiency of the pressure modulation effect.

Another suggestion was to utilize a sample chamber with highly polished walls to act as a light guide, thus increasing the amount of modulated infrared received at the detector.

Both of these latter two suggestions were determined to be feasible but not adequate to achieve the sensitivity desired for a gas analyzer.

SUMMARY OF THE INVENTION

This invention improves the prior art gas analyzer by (a) incorporating a measurement channel and a continuous reference channel, (b) devising a reliable algorithm for calculating the gas concentration based upon the information available from the measurement and reference channels, and (c) incorporation of a flexible diaphragm between the pressure modulator and the sample chamber.

This invention also includes an improvement in the method of detecting low concentrations of a selected gas such as CO.

BRIEF DESCRIPTION OF THE DRAWINGS

Figure 1 is an elevational, cross-sectional, view of a gas analyzer constructed in accordance with the teachings of this invention and a schematic illustration of certain electronic circuitry used therewith, and

Figure 2a-f illustrate typical waveforms generated during the operation of a gas analyzer of this invention and accompanying vector analysis.

DETAILED DESCRIPTION

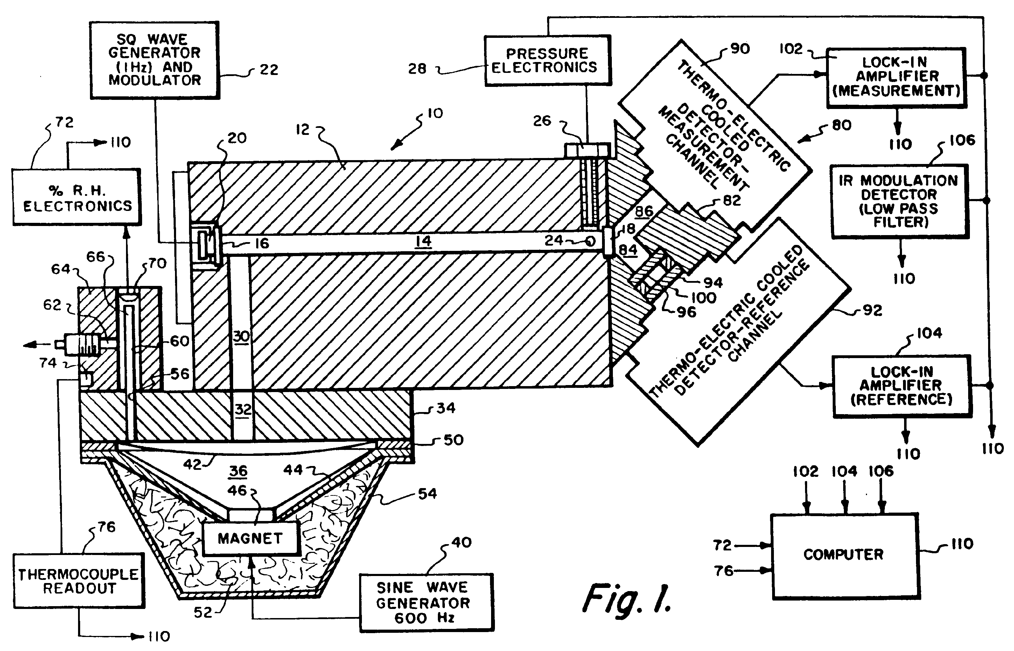

As shown in Fig.1, the gas analyzer of this invention, denoted in its entirety as 10, comprises a block shaped main body member 12 having a passage 14 which comprises both a light guide and part of a sample chamber. The passage 14 is closed at one end by a sapphire window 16 and at the other end by a 4.6 $\mu$m (micron) optical interference filter and sealing window 18. An IR source 20 is pulsed at the rate of 1 Hz by a square wave generator and modulator 22 and the wall of the passage 14 is highly polished so as to act as a light guide thus increasing the amount of modulated infrared energy reaching the sealing window 18. Within the closed part of the passage 14 and near the sealing window 18, a sample inlet port 24 is provided for a pressurized gas sample to enter the sample chamber and on this same end of the passage 14 and also within the closed part of the sample chamber is a pressure transducer 26 for converting pulsating pressure in the sample chamber into electrical signals communicating with suitable electronics 28.

In the area adjacent the sapphire window 16, the body member 12 is provided with a vertical passage 30 which communicates with the passage 14. The other end of the vertical passage 30 connects with a second passage 32 formed in a speaker plate 34 and thus connects the sample chamber with a loudspeaker 36 for providing the pulsating pressure through the two vertical passages 30 and 32 and the passage 14. The loudspeaker 36 is pulsed at the rate of approximately 600 Hz dependent upon the acoustic resonant frequency of passages 14, 30 and 32 by a sine wave generator 40. The passages 14,30 and 32 comprise the sample chamber and their combined length is equal to one fourth of the acoustic wave length of the modulation frequency of the pulsating pressure in the sample chamber.

Interposed between the speaker 36 and the vertical passages 30 and 32 is a flexible modulator diaphragm 42 (typically of 50 $\mu$m (2 mils) thick nylon) isolating the air within the volume defined by speaker cone 44 and magnet 46 from the pulsating pressure in the sample chamber. A suitable seal ring gasket 50 is provided between the speaker plate 34 and the speaker 36.

In the prior art analyzer, there was no pressure isolation diaphragm, such as flexible diaphragm 42, between the loudspeaker and the sample chamber. Instead, the speaker was sealed inside a pressure chamber without sound absorbing material behind the speaker to eliminate acoustic reflections. The acoustic reflections from the back of the speaker contributed to phase instability in the voltage measured at the detector output.

The flexible diaphragm 42 of this invention allows atmospheric pressure to be present on both sides of the speaker cone 44. The higher pressure on the sample side of the flexible diaphragm 42, due to sample flow, maintains the tension necessary to transmit pressure oscillations from the loudspeaker 36 to the sample chamber which is typically at a frequency of 600 Hz. Radiated acoustic noise from the rear of the loudspeaker is attenuated by placing sound absorbing material 52 behind the loudspeaker 36 within a thin plastic chamber 54 which is not sealed against atmospheric pressure. The plastic chamber 54 is suitably attached to the loudspeaker 36. An additional benefit of the flexible diaphragm 42 is that phase changes due to changes in the effective length of the sample chamber (because variations in sample pressure due to variations in flow cause variable deflections of the modulator diaphragm) are eliminated. Eliminating this source of phase changes greatly stabilizes the offset voltage from the two detectors, reducing the rate of drift of the system calibration and lengthening the time between calibration cycles. Stated another way, with the flexible diaphragm 42, the speaker cone 44 and magnet 46 are free to operate independently of the pressure in the sample chamber and thus stabilize themselves in the positions for which they were designed.

On the same side of the diaphragm 42 as the sample chamber is a smaller vertical passage 56 in the speaker plate 34 coaxial with a second vertical passage 60 and a horizontal passage 62 in a block 64 which is smaller than the main body member 12. Passage 62 is the outlet for the gas sample. The vertical passages 56 and 60 contain a tube 66 connected to the sample chamber for flow of the sample gas therethrough which cooperates with a humidity sensor 70 to produce electrical signals corresponding to the humidity in the pressure chamber and which is connected to suitable electronics 72 to process such signals. The tube 66 is narrower than the passage 60 and forms a restriction for the flow of sample gas from the sample chamber thus maintaining the sample chamber at a slightly higher pressure than the atmospheric pressure as mentioned above.

The block 64 also contains a thermocouple 74 which is connected to suitable electronics 76 to produce signal representative of the temperature of the analyzer.

On the same end of the main body 12 on the side of the sealing window 18 opposite the closed passage 14 is a detection assembly, denoted in its entirety as 80, which comprises a Y-shaped beam splitter 82 having two diverging cylindrical channels, a reference channel 84 and a measurement channel 86. These channels function as light guides and are highly polished for the maximum transfer of energy from the sealing window 18 to two detectors 90 and 92. The two channels are constructed as symetrically as possible to cause the outputs of two detectors 90 and 92 to be identical with no CO present in the sample chamber. The two detectors 90 and 92 (lead selenide detector assemblies) are available from Andros,Inc of Berkeley,CA, Model No. 380100.

The reference channel 84 contains a cylindrical sample cell 94 which is filled with CO as a reference gas. For a sample cell 0.63 cm (one-fourth inch) in length, the cell is filled with 100% CO at 6.2 x $10^4$ pa (9 psi). The interior surface of the sample cell 94 is of the same diameter as the reference channel 84, and is also highly polished, to allow maximum energy transmission through the sample cell. The sample cell windows 96 and 100, which seal the sample cell, are preferably of 0.5 mm thick silicon coated with a monomolecular layer of silicon monoxide to allow maximum transmission of IR energy (about 95%) therethrough. The cell windows 96 and 100 may also be made of 0.5 mm sapphire, if a signal loss of 30% is allowable.

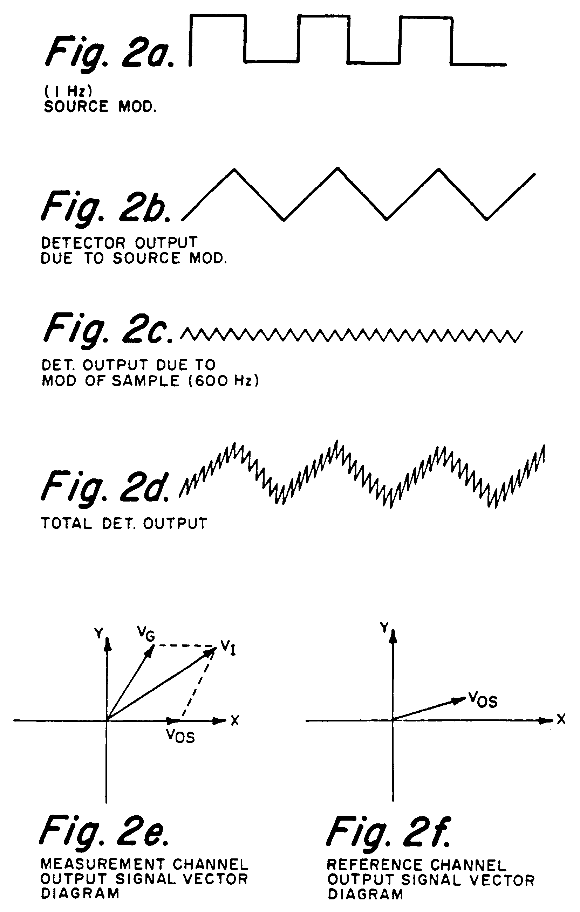

The output voltages from each of the two detectors 90 and 92, as shown in Fig. 2, consist of a combination of two frequencies: (1) a triangular wave of approximately 1 Hz and a few millivolts in amplitude (Fig.2A), which is due to the 1 Hz square wave (Fig.2A) modulation of the IR source 16, the triangular-shaped output being caused by the integration effect from the very slow temperature change of the source in response to the square wave change in current through the IR source 16, and (2) a sine wave comprising about 10 to 15 microvolts peak-to-peak of offset (both channels) (Fig.2A), plus about 1 microvolt peak-to-peak per ppm of CO (measurement channel only), at the frequency of the pressure modulation (typically 600 Hz) (Fig.2C). The 600 Hz AC signals (Fig.2C) are detectable using synchronous detectors 102 and 104 (sometimes called "lock-in amplifiers"), referenced to the AC output of the pressure transducer 26. The lock-in amplifiers 92 and 94 are available from E.G. & G, Princeton Applied Research Division, Princeton, N.J., Model No. 5210.

Derivation of CO concentration is accomplished by vectorially subtracting the offset voltage obtained from the reference channel 84 (the output due to CO being absorbed by the CO cell) from the output obtained from the measurement channel 86.

In figures 2e and f, the vector $V_I$ (fig.2e) represents the output signal received from the measurement channel 86, which is the vector sum of offset vector $V_{OS}$ and absorption signal vector $V_G$. Vector rotation frequency is equal to the pressure modulation frequency. The output signal from the reference channel 84 (fig.2f) contains only the offset signal $V_{OS}$. The algorithm, Appendix A, calculates $V_G$ by subtracting vector $V_{OS}$ from vector $V_I$.

The measurement and reference channels 86, 84 have slightly different sensitivities due to optical path and electronic assymetries. This produces slightly different values for Vos from each channel. To compensate for this effect, a sample gas is introduced into the analyzer which contains no carbon monoxide, so that the output of each channel will be due only to the offset component vector, $V_{OS}$. A cross-channel normalization constant may then be determined. In this manner, the offset vector $V_{OS}$ determined from the reference channel 84 may be multiplied by the appropriate constant such that it will exactly cancel the offset vector appearing in the measurement channel output.

Variations in DC pressure inside the sample chamber, modulation pressure, sample humidity, and analyzer temperature are measured and used to correct the final gas concentration reading. Variations in IR source intensity are detected by modulating the IR source intensity at a frequency much lower than the pressure modulation frequency. Source intensity variations may then be detected and electronically separated from the IR absorption signals at the pressure modulation frequency by an IR modulation detector (low pass filter) 106. The intensity variation information is used to provide a further correction to the gas concentration output. All necessary parameters being connected to computer 110.

A summary of all of the calculations required, including those used at the time of initial calibration and those used during each measurement, is given in Appendix A. The "Summary of Calculations" of Appendix A is the equivalent of a flow chart for the algorithm.

In the foregoing, CO is the gas being analyzed but other gases may be similarly analyzed with the gas in the reference cell changed accordingly. Similarly, the optical filter matches the IR energy absorption band for CO but if other gases are analyzed having different IR absorption bands of radiant energy are used, the filter will be changed accordingly. Also, "pump", "pressure modulator" and "speaker" are used herein interchangeably, and "IR energy" and "radiant energy" are used herein interchangeably.

APPENDIX

APPENDIX "A"

CALCULATIONAL ALGORITHM

The following sections describe the calculational algorithms that are necessary to convert the complex numbers that represent the detector output to meaningful concentration values. It is necessary to calibrate the system both for CO and for $CO_2$.

EP 0 387 684 B1

Definitions

| Symbol | Description |
| --- | --- |
| K1 | Relative humidity proportionality constant. |
| K2 | Relative humidity offset constant. |
| K3 | Standard analyzer case temperature (degrees Kelvin). |
| K4 | Standard analyzer internal steady-state pressure signal (DC voltage from pressure transducer). |
| K5 | Standard IR modulation intensity signal out of detector due to IR source modulation (mv-ppm). |
| K6 | Standard analyzer internal RMS pressure modulation signal (RMS voltage from pressure transducer). |
| K7 | Cross-channel calibration constant for CO2 response (vector magnitude ratio). |
| dTheta7 | Cross-channel calibration constant for CO2 response (vector angle difference). |
| K8 | CO output scaling factor, vector magnitude to ppm (ppm/uv). |
| $R_o$ | Vector magnitude output voltage from detector due to 600 Hz IR modulation. |
| T | Analyzer case temperature (degrees C). |
| $V_I$ | Output voltage from detector due to modulation of IR source (mV pp). |
| $V_H$ | Output voltage from humidity sensor (VDC). |
| $V_M$ | Output voltage from pressure transducer due to pressure modulation (VRMS). |
| $V_P$ | Output voltage from pressure transducer due to analyzer internal steady-state pressure (VDC). |

Summary of Calculations

$CO_2$ Calibration

    a. Zero calibration gas containing no CO or CO2 is measured and offset vectors are determined from ch. 1 and ch. 2.

    b. $CO_2$ calibration gas (approx. 3% and containing no CO) is measured and full-scale output vectors are

6

determined for each channel.

c. Offsets are subtracted vectorially from each channel.

d. Each channel is normalized using appropriate ratios of measured values to standard values (scalar multiplication of vector magnitude).

e. The cross-channel correction factors X7 and dTheta7 are determined for the reference channel.

## CO Calibration

a. The calibration gas concentration is recorded.

b. Zero calibration gas containing no CO2 or other interferent gases is measured and offset vectors are determined for both channels.

c. Full-scale output is measured.

d. Offsets are subtracted vectorially from each channel.

e. Each channel is normalized as in (d) in the $CO_2$ calibration.

f. The normalized reference channel is vectorially multiplied by the cross-calibration factor using K7 and dTheta7.

g. The adjusted, normalized, reference channel is vectorially subtracted from the normalized measurement channel.

h. The CO output scaling factor, K8, is determined using the resultant vector magnitude and the CO calibration gas concentration previously recorded.

## CO Measurement

a. The offsets for each channel measured during CO calibration are normalized using the appropriate ratios of the current system parameters to the parameters in effect during calibration.

b. The normalized offsets are subtracted from the ch. 1 and ch. 2 outputs.

c. Each channel output is normalized to the standard system parameters.

d. The cross-channel correction factors K7 and dTheta7 are applied to the normalized reference channel (complex multiplication).

e. The adjusted, normalized, reference channel vector is subtracted from the normalized measurement channel vector (complex subtraction).

f. The resultant vector magnitude is scaled by multiplying by K8 (scalar multiplication).

## Equations

### Vector Subtraction, General Equations:

$$R_o = R_a - R_b = SQRT((R_aSIN(K_aTh_a) + R_bSIN(K_a(Th_b - 180)))^\wedge 2 + (R_aCOS(K_aTh_a) + R_bCOS(K_a(Th_b - 180)))^\wedge 2) \quad (1a)$$

$$Theta = (1/K_a)ATAN((R_aSIN(K_aTh_a + R_bSIN(K_a(Th_b - 180)))/(R_bCOS(K_aTh_b + R_bCOS(K_a(Th_b - 180)))) \quad (1b)$$

where

$K_a$    = 2PI/360 (conversion from degrees to radians)

$R_a$    = vector magnitude

$R_b$    = vector magnitude

$Th_a$   = vector angles in degrees

$Th_b$   = vector angles in degrees

### $CO_2$ Calibration

a. Subtraction of Offsets, Channels 1 & 2:

In equ. 1a,     $R_a$=Channel 1(2) f.s. vector magnitude

                       $R_b$=Channel 1(2) offset vector magnitude

In eq. 1b,     $Th_a$=Channel 1(2) f.s. vector angle

                       $Th_b$=Channel 1(2) offset vector angle

b. Normalized $R_o$, Channels 1 & 2:

$$R_o(uv) = (Ch\ 1(2) - Offset) * \frac{K5 * K6 * T * V_P}{K3 * K4(K1 * V_H + K2)V_M * V_I} \quad (2)$$

where $V_I$ is the IR modulation associated with the respective channel.

c. Cross-Channel Correction Factors:

$$K7 = (Channel\ 1\ Norm.\ R_o)/(Channel\ 2\ Norm.\ R_o) \quad (3a)$$
$$dTheta7 = (Channel\ 1\ Theta) - (Channel\ 2\ Theta) \quad (3b)$$

## CO Calibration

a. Subtraction of Offsets:

Same as (a) in $CO_2$ calibration section

b. Normalization:

Same as (b) in $CO_2$ calibration section

c. Adjusted Reference Channel:

$$Adjusted\ Norm.\ R_o = K8 * (Normalized\ R_o) \quad (4a)$$
$$Adjusted\ Theta = (Theta,\ adj.\ ref\ ch.) + (dTheta7) \quad (4b)$$

d. Resultant:

$$Resultant = Vector\ subtraction\ using\ eqs\ 1a\ and\ 1b, \quad (5)$$

where

$R_a$ = Channel 1 Norm. $R_o$,

$R_b$ = Channel 2 Adj. Norm. $R_o$,

$Th_a$ = Ch 1 Norm. Theta,

$Th_b$ = Ch. 2 Adj. Norm. Theta.

e. CO Output Scaling Factor:

$$K8 = \frac{(CO\ span\ gas\ value\ in\ ppm)}{(Norm.\ R_o\ in\ uv)}\ (ppm/uv) \quad (6)$$

## CO Measurement

a. Offset Normalization

$$\text{Norm. Offset } R_O = (R_O\ calofst) * \left[ \frac{T1*V_P1*(K1*V_H2+K2)*V_M2*V_I2}{T2*V_P2*(K1*V_H1+K2)*V_M1*V_I1} \right] \quad (7)$$

where T1, $V_P1$, etc., and ($R_o$ cal ofst) pertain to data obtained during calibration, and T2, $V_P2$, etc. pertain to data obtained during the current measurement.

b. Subtraction of Offsets:

Same as (a) in $CO_2$ calibration section

c. Normalization of Each Channel:

Same as (b) in $CO_2$ calibration section

d. Adjusted Reference Channel:

Same as (c) in $CO_2$ calibration section

e. Resultant:

Same as (d) in $CO_2$ calibration section

f. Output Scaling:

$$CO\ Concentration\ in\ ppm = K8 * (Channel\ 1\ Resultant) \quad (8)$$

## Humidity Effect Correction

As humidity increases, the CO output from the analyzer may increase for a given gas concentration. This effect is assumed to be linear (for a first approximation). The initial relation between CO output and humidity was that for gas at 37 C, the CO output would increase by 10% from a humidity of 14.8% to a humidity of 42.3% (obtained from experimental data). This corresponds to a humidity change at 23 C of from 47% to 100%, which is the condition under which the data was taken. The values were transformed to 37 C because that was the temperature of the humidity sensor inside the analyzer. All correction calculations must therefore be based upon analyzer temperature.

a. Humidity Sensor Output Voltage

The output voltage of the sensor is linear, but is not referred to zero. The output at zero R.H. is +1.0 volt, and at 100% R.H. is +5 volts.

Therefore,

$$\%R.H. = Kb * V_H + Kc \quad (9)$$

where

Kb    = 25

Kc    = -25

$V_H$    = humidity sensor output voltage

b. Humidity Correction Equation

Assuming a linear relationship between R.H. and CO output, it is possible to write

$$C = Kd * R.H. + Ke \quad (10)$$

where

Kd is the slope of the linear relation, and

Ke is the intercept, or offset.

Putting (9) into (10),

$$C = Kd * (Kb * V_H + Kc) + Ke = Kd * Kb * V_H + Kd * Kc + Ke$$

or,

$$C = K1V_H + K2 \quad (11)$$

where K1 = Kd*Kb, and K2 = Kd*Kc + Ke

Evaluation of Kd and Ke:

Let

RH1    = low humidity point where C = 1

RH2    = high humidity point where C = 1+x.

Therefore,

$$Kd = (1 + x - 1)/(RH2 - RH1)$$

or,

$$Kd = x/(RH2 - RH1) \quad (12)$$

Ke is the intercept, defined by

$$Ke = C - Kd * RH \quad (13)$$

Let x=0.1, RH1=14.8, RH2=42.3.    Then, Kd=0.00364 (eq. 12).

Let C=1 when RH=14.8.    Then Ke=0.946 (eq. 13).

Calculation of K1 and K2:

$$K1 = Kd * Kb = 0.091$$

$$K2 = Kd * Kc + Ke = 0.855$$

If no humidity correction is desired, x=0, Kd=0, C=1, Ke=1.

Therefore, K1=0, and K2=1.

## Claims

1.    A gas analyzer for detecting the concentration of a selected gas in a gas sample, comprising,

sample chamber means (14,30,32) for containing a sample volume (14) of the gas being detected,

means (20) for producing and directing radiant energy through the sample volume (14),

means (22) for modulating the power output of the radiant energy at a first frequency,

pressure modulating means (36) for modulating the sample volume (14) at a second frequency,

means (80,26) for detecting the radiant energy passed through the sample volume (14) and modulated pressure and producing a composite signal, and

processing means (110), **characterised in that,** said detecting means (80,26) comprise means (82) for splitting the detected radiant energy into two channels which guide one part of the detected radiant energy to a measurement detector (90) which produces a measurement signal and which guides the second part of the detected radiant energy first through a reference cell (94) containing a gas of the type being detected and then to a reference detector (92) which produces a reference signal, with the said processing means (110) processing the measurement signal and reference signal to produce an output signal representative of the concentration of the gas in the sample volume.

2. The gas analyzer as claimed in claim 1 wherein said pressure modulating means (36) comprise a loud speaker with a cone (44) and magnet (46) with means whereby said cone and magnet are isolated from the sample volume (14).

3. The gas analyzer as claimed in claim 2 wherein said isolating means comprises a flexible diaphragm (42).

4. The gas analyzer as claimed in claim 3 further including means (52) for attenuating radiated acoustic noise in said loud speaker.

5. The gas analyzer as claimed in claim 4 wherein the length of said sample chamber (14,30,32) is one fourth of the wave length of the frequency of modulation of the pressure in the sample volume (14).

6. The gas analyzer a claimed in claim 5 wherein said sample chamber (14,30,32) is highly polished for maximum energy transfer through said sample chamber.

7. A method for detecting the concentration of a selected gas in a gas sample, comprising,
providing a source (20) of radiant energy,
providing a sample volume (14) of the gas being detected contained in a sample chamber (14,30,32),
directing the radiant energy through the sample volume (14) and modulating the power output of the radiant energy source (20) at a first frequency,
providing a pressure modulator (36) connected to the gas sample,
modulating the absorption of radiant energy within the sample volume (14) by varying gas pressure at a second frequency,
detecting the radiant energy passing through the sample volume, **characterised by** producing a reference signal and a measurement signal corresponding to the detected radiant energy by splitting the detected radiant energy into two parts by two guide channels (82,84) and directing one part through a cell (94) containing a gas of the type being detected and to a reference detector (92) for providing a reference signal and directing the other part directly to a detector (90) for providing a measurement signal, and
processing said measurement signal and reference signal to produce an output signal corresponding to the concentration of the selected gas in the sample.

## Patentansprüche

1. Ein Gasanalysator zum Feststellen der Konzentration eines ausgewählten Gases in einer Gasprobe mit einer Probenkammervorrichtung (14, 30, 32) zum Aufnehmen eines Probenvolumens (14) des Gases, das detektiert wird,
einer Vorrichtung (20) zum Erzeugen und Lenken einer Strahlungsenergie durch das Probenvolumen (14),
einer Vorrichtung (22) zum Modulieren der Ausgangsleistung der Strahlungsenergie bei einer ersten Frequenz,
einer Druckmodulierungsvorrichtung (36) zum Modulieren des Probenvolumens (14) bei einer zweiten Frequenz,
einer Vorrichtung (80, 26) zum Feststellen der durch das Probenvolumen (14) hindurchgegangenen Strahlungsenergie und des modulierten Drucks und zum Erzeugen eines zusammengesetzten Signals, und
einer Verarbeitungsvorrichtung (110), **dadurch gekennzeichnet,** daß die Nachweisvorrichtung (80, 26) eine Vorrichtung (82) zum Aufspalten der festgestellten Strahlungsenergie in zwei Kanäle umfaßt, die einen Teil der festgestellten Strahlungsenergie zu einem Meßdetektor (90) leitet, der ein Meßsignal erzeugt, und die den zweiten Teil der festgestellten Strahlungsenergie zuerst durch eine Referenzzelle (94), die ein Gas in der Art des Gases, das detektiert wird, enthält, und dann zu einem Referenzdetektor (92) leitet, der ein Referenzsignal erzeugt, wobei die Verarbeitungsvorrichtung (110) das Meßsignal und das Referenzsignal verarbeitet zur Erzeugung eines Ausgangssignals, das für die Konzentration des Gases in dem Probenvolumen repräsentativ ist.

2. Der Gasanalysator nach Anspruch 1, wobei die Druckmodulationsvorrichtung (36) einen Lautsprecher umfaßt mit einem Konus (44) und einem Magneten (46) mit Vorrichtungen, durch die der Konus und der Magnet von dem Probenvolumen (14) isoliert sind.

3. Der Gasanalysator nach Anspruch 2, wobei die isolierende Vorrichtung eine flexible Membran (42) umfaßt.

4. Der Gasanalysator nach Anspruch 3, der weiter eine Vorrichtung (52) zum Abschwächen ausgestrahlten akustischen Rauschens in dem Lautsprecher enthält.

5. Der Gasanalysator nach Anspruch 4, wobei die Länge der Probenkammer (14, 30, 32) ein Viertel der Wellenlänge der Modulationsfrequenz des Drucks in dem Probenvolumen (14) beträgt.

6. Der Gasanalysator nach Anspruch 5, wobei die Probenkammer (14, 30, 32) hochpoliert ist für einen maximalen Energiedurchgang durch die Probenkammer.

7. Ein Verfahren zum Feststellen der Konzentration eines ausgewählten Gases in einer Gasprobe umfassend:
Vorsehen einer Quelle (20) für Strahlungenergie,
Vorsehen eines in der Probenkammer (14, 30, 32) enthaltenen Probenvolumens (14) des Gases, das detektiert wird,
Richten der Strahlungsenergie durch das Probenvolumen (14) und Modulieren der Ausgangsleistung der Strahlungsenergiequelle (20) bei einer ersten Frequenz,
Vorsehen eines Druckmodulators (36), der mit der Gasprobe in Verbindung steht,
Modulieren der Absorption der Strahlungsenergie innerhalb des Probenvolumens (14) durch Verändern des Gasdrucks bei einer zweiten Frequenz,
Feststellen der durch das Probenvolumen hindurchtretenden Strahlungsenergie, **gekennzeichnet durch**
Erzeugen eines Referenzsignals und eines der festgestellten Strahlungsenergie entsprechenden Meßsignals durch Aufspalten der festgestellten Strahlungsenergie in zwei Teile durch zwei Leitkanäle (82, 84) und Lenken von einem Teil durch eine Zelle (94), die ein Gas von der Art des Gases, das detektiert wird, enthält und zu einem Referenzdetektor (92) zum Schaffen eines Referenzsignals und Lenken des anderen Teils direkt zu einem Detektor (90) zum Schaffen eines Meßsignals, und
Verarbeiten des Meßsignals und des Referenzsignals zur Erzeugung eines der Konzentration des ausgewählten Gases in der Probe entsprechenden Ausgangssignals.

**Revendications**

1. Analyseur de gaz pour détecter la concentration d'un gaz choisi dans un échantillon gazeux, comprenant :
des moyens de chambre d'échantillon (14,30,32) pour contenir un volume-échantillon (14) du gaz à détecter,
des moyens (20) pour produire et faire passer de l'énergie rayonnée à travers le volume-échantillon (14),
des moyens (22) pour moduler la puissance en sortie de l'énergie rayonnée selon une première fréquence,
des moyens de modulation en pression (36) pour moduler le volume-échantillon (14) selon une seconde fréquence,
des moyens (80,26) de détection de l'énergie rayonnée ayant traversé le volume-échantillon (14) et de la pression modulée et de fourniture d'un signal composite, et
des moyens de traitement (110), caractérisé en ce que lesdits moyens de détection (80,26) comprennent des moyens (82) pour diviser l'énergie rayonnée détectée entre deux canaux qui guident une partie de l'énergie rayonnée détectée vers un détecteur de mesure (90) qui délivre un signal de mesure et qui guident la seconde partie de l'énergie rayonnée détectée d'abord à travers une cellule de référence (94) contenant un gaz du type à détecter, puis vers un détecteur de référence (92) qui délivre un signal de référence, lesdits moyens de traitement (110) traitant le signal de mesure et le signal de référence pour délivrer un signal de sortie représentatif de la concentration du gaz dans le volume-échantillon.

2. Analyseur de gaz selon la revendication 1, dans lequel lesdits moyens de modulation en pression (36) comprennent un haut-parleur équipé d'une membrane conique (44) et d'un aimant (46) ainsi que des moyens grâce auxquels ladite membrane conique et ledit aimant sont isolés du volume-échantillon (14).

3. Analyseur de gaz selon la revendication 2, dans lequel lesdits moyens d'isolation comprennent une membrane souple (42).

4. Analyseur de gaz selon la revendication 3 comprenant en plus des moyens (52) pour atténuer le bruit acoustique rayonné dans ledit haut-parleur.

5. Analyseur de gaz selon la revendication 4, dans lequel la longueur de ladite chambre d'échantillon (14,30,32) est égale à un quart de la longueur d'onde de la fréquence de modulation de la pression dans le volume-échantillon (14).

6. Analyseur de gaz selon la revendication 5, dans lequel ladite chambre d'échantillon (14,30,32) est hautement polie pour un transfert d'énergie maximum via ladite chambre d'échantillon.

7. Méthode pour détecter la concentration d'un gaz choisi dans un échantillon gazeux comprenant :
la fourniture d'une source (20) d'énergie rayonnée,
la fourniture d'un volume-échantillon (14) du gaz à détecter contenu dans une chambre d'échantillon (14,30,32),
le passage de l'énergie rayonnée à travers le volume-échantillon (14) et la modulation de la puissance en sortie de la source d'énergie rayonnée (20) selon une première fréquence,
la fourniture d'un modulateur de pression (36) connecté à l'échantillon de gaz,
la modulation de l'absorption de l'énergie rayonnée à l'intérieur du volume-échantillon (14) en faisant varier la pression du gaz selon une seconde fréquence,
la détection de l'énergie rayonnée ayant traversé le volume-échantillon, caractérisée par la production d'un signal de référence et d'un signal de mesure correspondant à l'énergie rayonnée détectée en divisant l'énergie rayonnée détectée en deux parties par deux canaux de guidage (82,84) et en dirigeant une partie à travers une cellule (94) contenant un gaz du type à détecter et vers un détecteur de référence (92) qui délivre un signal de référence et en dirigeant l'autre partie directement vers un détecteur (90) qui délivre un signal de mesure, et
le traitement dudit signal de mesure et dudit signal de référence pour délivrer un signal de sortie correspondant à la concentration du gaz choisi dans l'échantillon.

EP 0 387 684 B1

Fig. 1.

13

*Fig. 2a.*

( I Hz)
SOURCE MOD.

*Fig. 2b.*

DETECTOR OUTPUT
DUE TO SOURCE MOD.

*Fig. 2c.*

DET. OUTPUT DUE TO
MOD OF SAMPLE (600 Hz)

*Fig. 2d.*

TOTAL DET. OUTPUT

*Fig. 2e.*

MEASUREMENT CHANNEL
OUTPUT SIGNAL VECTOR
DIAGRAM

*Fig. 2f.*

REFERENCE CHANNEL
OUTPUT SIGNAL VECTOR
DIAGRAM